(19) Europäisches Patentamt / European Patent Office / Office européen des brevets

(11) **EP 2 922 191 B1**

(12) **FASCICULE DE BREVET EUROPEEN**

(45) Date de publication et mention
de la délivrance du brevet:
**04.09.2019 Bulletin 2019/36**

(51) Int Cl.:
***H02M 3/155*** *(2006.01)*

(21) Numéro de dépôt: **15159288.8**

(22) Date de dépôt: **16.03.2015**

(54) **CONVERTISSEUR ASSERVI EN COURANT DE SORTIE**

MIT AUSGANGSSTROM VERSORGTER STROMWANDLER

CONVERTER SLAVED TO OUTPUT CURRENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.03.2014 FR 1452413**

(43) Date de publication de la demande:
**23.09.2015 Bulletin 2015/39**

(73) Titulaire: **VALEO VISION
93012 Bobigny Cedex (FR)**

(72) Inventeur: **Krick, Sébastian
75019 Paris (FR)**

(56) Documents cités:
**US-A1- 2009 045 785    US-A1- 2009 146 621
US-B1- 6 469 481**

- **CHIH-LUNG SHEN ET AL: "Single-Stage
Coupled-Inductor Sepic-Type HB-LED Driver
with Soft Switching for Universal Line Input",
MATHEMATICAL PROBLEMS IN ENGINEERING,
ARTICLE ID 723402, vol. 14, no. 4, 20 mai 2012
(2012-05-20), pages 663-17, XP055156658, ISSN:
1024-123X, DOI: 10.1049/ip-epa:20060486**

**Description**

L'invention a trait au domaine des convertisseurs à tension continue, notamment du type alimentation à découpage, SEPIC. Plus précisément, l'invention a trait à un convertisseur de type SEPIC asservi en courant de sortie, pour alimenter au moins une diode électroluminescente, LED.

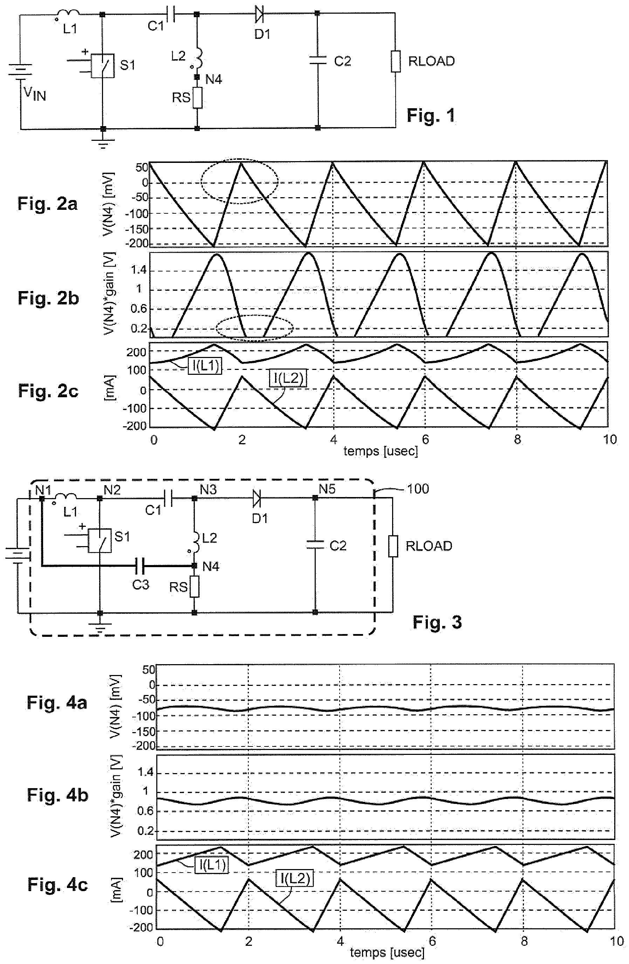

La figure 1 montre un schéma d'un convertisseur SEPIC tel qu'il est connu dans l'état de l'art. Le convertisseur SEPIC, qui vient de l'acronyme anglais relié à l'expression «single ended primary inductor converter» est une alimentation à découpage qui sert à convertir une première tension continue $V_{IN}$ en une deuxième tension continue $V_{OUT}$, de valeur différente, soit plus faible ou plus importante que la première tension continue. La valeur de la tension de sortie dépend du rapport cyclique de fermeture de l'interrupteur S1. Lorsque l'interrupteur est ouvert, les deux inductances L1 et L2 alimentent le circuit de charge RLOAD en courant à travers la diode D1. Lorsque l'interrupteur est fermé, la source de tension charge l'inductance L1 tandis que la première capacité C1 charge la deuxième inductance L2. Le circuit de charge est alors alimenté en courant par la deuxième capacité C2. Il est également possible de remplacer les deux inductances L1 et L2 par deux inductances couplées sur le même circuit magnétique.

Un autre exemple de convertisseur SEPIC appliqué à une lampe à LED peut être trouvé dans le document "Single-Stage Coupled-Inductor Sepic-Type HB-LED Driver with Soft Switching for Universal Line Input" (Mathematical problems in engineering, vol. 14, no.4).

Pour un nombre d'applications de ce type de convertisseur, et notamment dans le cas où il est utilisé pour alimenter une ou plusieurs diodes électroluminescentes, LED, il est important que le courant de charge soit généralement constant dans le temps. En effet, l'intensité lumineuse d'une LED est une fonction du courant qui l'alimente. La tension de charge est une conséquence du type et du nombre de LEDs montées en charge. Afin de garantir un courant de charge ou de sortie généralement constant, il est nécessaire d'asservir le courant de sortie au convertisseur. La mesure de courant de sortie ne peut pas être réalisée par un shunt en sortie de convertisseur pour des raisons de protection des sorties. Ceci est particulièrement important dans le domaine automobile, qui recourt de plus en plus à la technologie LED pour des solutions de signalisation lumineuse.

Il est connu de mesurer le courant de sortie d'un convertisseur de type SEPIC par voie indirecte. En effet, le courant moyen passant par l'inductance secondaire L2 est égal au courant de sortie. La mesure de ce courant en aval de L2 est donc un candidat présumé pour l'asservissement du courant de sortie. Cette mesure n'est correcte que si les inductances couplées L1 et L2 sont exactement égales. Dans les cas pratique de deux inductances distinctes, la répartition des courants ondulatoires, ou courants de ripple, dépend du facteur L1/L2 et du coefficient de couplage k entre L1 et L2. Il est difficile de maîtriser ces grandeurs. A défaut, et en pratique, un déséquilibre des courants de ripple peut se créer. Par superposition au courant qui passe par L2 lors de l'opération du convertisseur, le courant résultant qui est censé représenter le courant de sortie du convertisseur, peut changer de signe sans que la moyenne du courant dans L2 ne soit changée. A défaut d'utiliser une alimentation symétrique, les amplificateurs du potentiel mesuré entre le noeud N4 et la masse ne sont pas capables d'amplifier correctement un signal qui change de signe. Par conséquent, une telle mesure qui servirait pour l'asservissement serait faussée et cette erreur serait retransmise au courant de sortie. Une illustration de ce comportement d'un convertisseur connu de l'art antérieur est fournie par les figures 2a, 2b et 2c respectivement. La figure 2a montre l'évolution temporelle de la tension entre le noeud N4 et la masse. La figure 2b montre le même signal amplifié par un amplificateur opérationnel. La figure 2c montre l'évolution correspondante des courants passants par les inductances L1 et L2 respectivement. Le cercle superposé aux figures 2a et 2b met en évidence un changement de signe de la tension mesurée entre le noeud N4 et la masse.

L'invention a pour objectif de proposer un convertisseur de type SEPIC palliant au moins un des inconvénients de l'art antérieur. Plus précisément, l'invention a pour objectif de proposer un convertisseur dans lequel une valeur représentative du courant instantané de sortie est mesurée de façon indirecte en aval de l'inductance secondaire, afin d'être asservie au convertisseur.

L'invention a pour objet un convertisseur de type SEPIC destiné à convertir une première tension continue en une deuxième tension continue différente. Le convertisseur comprend :

- un premier noeud N1, qui sert à connecter une source de tension reliée à la masse, qui fournit la première tension $V_{IN}$;
- une première inductance L1 couplée au premier noeud N1 et à un deuxième noeud N2 ;
- un interrupteur S1 comprenant un premier contact couplé au noeud N2, et un deuxième contact couplé à la masse;
- une première capacité C1 couplée au noeud N2 à un troisième noeud N3 ;
- une deuxième inductance L2 couplée au noeud N3 et à un quatrième noeud N4 ;
- une diode D1 montée entre le noeud N3 et un cinquième noeud N5 de façon à ce qu'un courant puisse circuler du noeud N3 au noeud N5, qui sert à connecter un circuit de charge relié à la masse;
- une deuxième capacité C2 couplée au noeud N5 et à la masse;
- une résistance de mesure ou shunt Rs montée entre le noeud N4 et la masse.

Le convertisseur est remarquable en ce qu'il comprend une branche qui relie le noeud N1 au noeud N4, et qui comprend une troisième capacité C3.

De préférence, le convertisseur est alimenté par une batterie électrique, telle qu'une batterie d'un véhicule automobile.

La capacité C3 peut de préférence être dimensionnée de façon à ce que la différence de potentiel entre le noeud N4 et la masse ne change pas de signe lors de l'opération du convertisseur. De manière avantageuse, la capacité C3 peut être dimensionnée de façon à ce que la différence de potentiel entre le noeud N4 et la masse présente des variations inférieures à 100 mV lors de l'opération du convertisseur. De manière encore plus avantageuse, la capacité C3 peut être dimensionnée de façon à ce que la différence de potentiel entre le noeud N4 et la masse reste constante lors de l'opération du convertisseur.

De préférence, la valeur de la première inductance L1 peut être différente de la deuxième inductance L2 et les deux inductances peuvent être couplées.

L'interrupteur peut de préférence être un transistor, par exemple un transistor à effet de champ à grille isolée, MOSFET.

L'invention a également pour objet un dispositif de pilotage de l'alimentation électrique de diodes électroluminescentes, LED, pour un véhicule automobile. Le dispositif comprend un convertisseur de type SEPIC, qui est remarquable en ce qu'il est conforme au convertisseur selon l'invention.

Le dispositif peut de préférence comprendre des moyens de mesure de courant, disposées de façon à mesurer le courant électrique entre le noeud N4 et la masse. La mesure correspond à une mesure indirecte du courant de sortie du convertisseur. Le convertisseur est de préférence asservi en courant de sortie par la mesure indirecte du courant de sortie ainsi obtenue.

Le dispositif peut comprendre une capacité d'entrée CIN, couplée au noeud N1 et à la masse, montée en parallèle à la source de tension.

L'invention a également pour objet un dispositif lumineux pour véhicule automobile, notamment un dispositif d'éclairage ou de signalisation, comprenant une pluralité de LEDs et un dispositif de pilotage de l'alimentation de la pluralité de LEDs, Le dispositif est remarquable en ce que le dispositif de pilotage est conforme à l'invention.

L'invention a également pour objet un procédé d'alimentation d'au moins une diode électroluminescente, LED, montée en circuit de charge d'un convertisseur de type SEPIC selon l'invention alimenté par une première source de tension VIN. Le procédé est remarquable en ce qu'il comprend les étapes de :

- prise de mesure indirecte du courant de sortie du convertisseur par mesure du courant électrique entre le noeud N4 et la masse ;
- asservissement du convertisseur en courant de sortie par la mesure indirecte.

De préférence aux moins deux diodes électroluminescentes, LED, sont montées en série dans ledit circuit de charge.

L'invention permet de proposer un convertisseur de type SEPIC, capable de convertir une tension d'entrée en une tension de sortie soit plus élevée soit moins élevée que la tension d'entrée, et notamment capable d'alimenter un circuit de charge par un courant de valeur généralement constante. Sans l'invention, l'asservissement du convertisseur en courant de sortie n'est que difficilement réalisable. En effet, une mesure du courant traversant la deuxième inductance L2, en moyenne égale à une mesure du courant de sortie, se voit faussée si les inductances L1 et L2 ont des valeurs différentes. Par l'ajout de la capacité C3, la mesure indirecte du courant instantané de sortie se rapproche considérablement de la valeur réelle du courant de sortie, et ceci indépendamment des valeurs respectives des valeurs de L1 et L2 respectivement. L'asservissement du convertisseur en courant de sortie devient ainsi possible sans s'affranchir de la protection du circuit de charge qui est relié au convertisseur. Comme l'invention permet d'utiliser des inductances de valeurs différentes, la production d'un convertisseur SEPIC asservi en courant de sortie est rendue plus facile et moins onéreuse. En effet, sans l'invention, un tel convertisseur n'est pratiquement réalisable que si les inductances L1 et L2 sont sélectionnées de façon à être exactement égales. Si les inductances L1 et L2 sont exactement égales, l'effet des courants résiduels ondulatoires, ou courants de ripple, est moins important sur la mesure indirecte du courant de sortie. Cependant, des composants d'inductance issus de la production en masse sont rarement exactement égaux. Donc la mise en oeuvre pratique d'un tel convertisseur selon l'art antérieur engendre une procédure de sélection onéreuse des composants, impliquant une série de tests, ainsi qu'un rejet d'un nombre important de composants afin de garantir la correspondance exacte entre les inductances L1 et L2 utilisées dans le convertisseur. Cette procédure n'est plus nécessaire grâce à l'invention, qui permet d'utiliser les composant d'inductance issus de la production en masse comme inductances L1 et L2, sans pour autant impacter la performance du convertisseur de manière négative. La sensibilité du convertisseur par rapport aux valeurs d'inductances L1 et L2, ainsi que par rapport à leur coefficient de couplage k, est réduite.

D'autres caractéristiques et avantages de la présente invention seront mieux compris à l'aide de la description et des dessins parmi lesquels :

- la figure 1 est un schéma illustrant un convertisseur de type SEPIC connu de l'état de l'art ;
- les figures 2a, 2b et 2c montrent l'évolution temporelle de différents signaux mesurés lors de l'opération d'un convertisseur de type SEPIC connu de l'état de l'art ;
- la figure 3 est un schéma illustrant un convertisseur de type SEPIC selon un mode de réalisation de l'invention ;
- les figures 4a, 4b et 4c montrent l'évolution temporelle de différents signaux mesurés lors de l'opération d'un convertisseur de type SEPIC selon un mode de réalisation de l'invention.

Les figures 1 et 2a à 2c concernent un dispositif connu de l'état de l'art et ont été décrites plus haut.

La figure 3 schématise la topologie d'un convertisseur 100 de type SEPIC selon l'invention. Le convertisseur est destiné à convertir une première tension continue en une deuxième tension continue différente. La deuxième tension continue, ou tension de sortie, peut être plus élevée ou plus basse que la première tension, ou tension d'entrée. Le convertisseur comprend un premier noeud N1, qui sert à connecter une source de tension reliée à la masse, qui fournit la première tension $V_{IN}$. Dans un mode de réalisation préférentiel, la tension $V_{IN}$ est fournie par une batterie acier-plomb de 12V. De préférence il s'agit de la batterie d'un véhicule au sein duquel le convertisseur est utilisé pour alimenter des LEDs faisant partie d'une fonction d'éclairage du véhicule. Une première inductance L1 est couplée au premier noeud N1 et à un deuxième noeud N2. Ce deuxième noeud sert à relier une première borne d'un interrupteur S1, dont une deuxième borne est reliée à la masse. Une première capacité C1 est couplée au noeud N2 et à un troisième noeud N3. Une deuxième inductance L2 est couplée au noeud N3 et à un quatrième noeud N4. Une diode D1 est montée entre le noeud N3 et un cinquième noeud N5, de façon à ce qu'un courant puisse circuler du noeud N3 au noeud N5. Ce dernier noeud sert à connecter un circuit de charge illustré par une résistance RLOAD, relié à la masse. Une deuxième capacité C2 est couplée au noeud N5 et à la masse de façon parallèle au circuit de charge. Le noeud N4 est relié à la masse à travers une résistance de mesure Rs. Une branche supplémentaire relie le noeud N1 au noeud N4. Cette branche comprend au moins une troisième capacité C3.

L'effet de l'ajout de la capacité C3 entre les noeuds N1 et N4 est un amoindrissement substantiel de l'effet des courants ondulatoires résiduels, ou courants de ripple, issus des inductances L1 et L2, sur le courant mesuré entre le noeud N4 et la masse. L'effet des courants de ripple peut s'accentuer si les inductances L1 et L2 ne sont pas exactement égales, et il dépend de leur coefficient de couplage k. Le courant mesuré, une fois l'effet des courants de ripple amoindri, correspond au courant de sortie qui traverse le circuit de charge. Le fonctionnement de base du convertisseur SEPIC, capable de monter ou de baisser la tension $V_{IN}$, n'est pas affecté par l'ajout de la capacité C3.

Une illustration de ce comportement d'un convertisseur selon l'invention est fournie par les figures 4a, 4b et 4c respectivement. La figure 4a montre l'évolution temporelle de la tension entre le noeud N4 et la masse. La figure 4b montre le même signal amplifié par un amplificateur opérationnel. La figure 4c montre l'évolution correspondante des courants passants par les inductances L1 et L2 respectivement. En comparant le comportement illustré par la figure 4 avec le comportement d'un convertisseur connu tel qu'il est illustré par la figure 2, les observations suivantes s'imposent. Les courants dans les inductances L1 et L2 ne changent pas. Cependant, la tension mesurée entre le noeud N4 et la masse change. En effet, en utilisant le convertisseur selon l'invention, les variations de tension au noeud N4 sont amoindries ou lissées de manière significative.

Ceci explique de manière générale le principe sous-jacent de la présente invention.

La mesure indirecte du courant de sortie est de préférence effectuée aux bornes de la résistance de mesure Rs. De manière connue, la différence de potentiel aux bornes de Rs et mesurée et amplifiée, et le courant correspondant est obtenue par application de la loi d'Ohm.

Le dispositif comprend de préférence une boucle d'asservissement non-illustrée, qui permet de régler le rapport cyclique de fermeture de l'interrupteur S1 en fonction de la mesure indirecte du courant de sortie. La réalisation de tels moyens d'asservissement est en soi connue dans l'état de l'art et ne sera pas décrite en détail lors de cette description. Comme la tension appliquée au circuit de charge dépend du rapport cyclique de fermeture de l'interrupteur S1, la boucle d'asservissement est capable à appliquer une tension généralement stable au circuit de charge, et de lui fournir un courant généralement constant.

Dans un exemple d'application préféré, le convertisseur est utilisé pour réaliser un dispositif de pilotage de l'alimentation électrique de diodes électroluminescentes, LED. L'intensité lumineuse d'un LED varie de façon linéaire avec le courant qui la traverse. C'est pourquoi il est important d'alimenter une ou plusieurs LED, montées en série en circuit de charge du convertisseur, par un courant généralement constant. Le courant constant génère une intensité lumineuse constante. Puisque le convertisseur selon l'invention est de type SEPIC, une intensité lumineuse constante peut être réalisée même si le potentiel de départ $V_{IN}$ fluctue au cours du temps. Cette caractéristique rend le dispositif selon l'invention particulièrement adapté à des systèmes de signalisation luminaires pour véhicules automobiles. Dans ce genre d'applications, la tension d'entrée peut fluctuer en fonction des demandes ponctuelles de divers systèmes électriques au sein du véhicule. Tous les systèmes de bord peuvent être alimentés par une même batterie. Cependant, l'intensité lumineuse des LED de signalisation doit être constante.

C'est pourquoi, de préférence, le convertisseur selon l'invention est asservi de manière à fournir un courant et une tension aux diodes adaptés à la réalisation d'au moins une fonction lumineuse prédéterminée d'un véhicule automobile. La pluralité de LEDs pilotée à l'aide du convertisseur de l'invention est de préférence agencée pour réaliser au moins une fonction lumineuse prédéterminée d'un véhicule automobile, tel qu'un feu diurne, un feu de position, un feu antibrouillard, un indicateur de direction, un éclairage de type code ou un éclairage de type route.

Le convertisseur selon l'invention permet la réalisation d'une alimentation en courant fiable et facile à réaliser, puisque le courant d'asservissement du convertisseur donne une indication réaliste du courant de charge, même si les inductances L1 et L2 ne sont pas exactement identiques.

Le dimensionnement de la capacité C3 se fait de façon à ce que la différence de potentiel entre le noeud N4 et la masse, dont l'évolution est illustrée par la figure 4(a) ne change pas de signe. Des moyens informatiques de simulation de circuits en soi connus dans l'état de l'art permettent d'évaluer la capacité C4 appropriée en fonction de L1, L2, k et du courant de sortie. Le dimensionnement est choisi tel que dans le pire des cas la différence de potentiel entre le noeud N4 et la masse ne change pas de signe lors de l'opération du convertisseur.

Alternativement, la valeur de C3 peut être calculée de manière analytique par des calculs en soi connus dans l'art. Dans le cas où $V(N4) \ll V_{IN}$, le courant $I(L2)$ qui traverse l'inductance secondaire L2 n'est pas influencé, et on peut considérer l'inductance comme une source de courant. Lorsque l'interrupteur est ouvert, c.-à-d. entre l'instant $0 < t < DT$, cette source délivre le courant :

$$i_{L2}(t) = i_{Out} + \Delta I_{L2} \frac{2t - DT}{2DT}$$

Le courant de C3 :

$$i_{C3}(t) = C_3 \frac{dV_{C3}(t)}{dt}$$

La somme des courants:

$$i_{Rs}(t) = i_{L2}(t) + i_{C3}(t)$$

Le courant dans Rs peut être exprimé ainsi:

$$i_{Rs}(t) = \frac{V_{IN} - V_{C3}(t)}{R_S}$$

La somme des courants devient alors :

$$\frac{V_{IN} - V_{C3}(t)}{R_S} = \left( i_{Out} + \Delta I_{L2} \frac{2t - DT}{2DT} \right) + C_3 \frac{dV_{C3}(t)}{dt}$$

$$\frac{V_{IN}}{R_S} - \left( i_{Out} + \Delta I_{L2} \frac{2t - DT}{2DT} \right) = + C_3 \frac{dV_{C3}(t)}{dt} + \frac{V_{C3}(t)}{R_S}$$

$$V_{IN} - R_S \left( i_{Out} + \Delta I_{L2} \frac{2t - DT}{2DT} \right) = + R_S C_3 \frac{dV_{C3}(t)}{dt} + V_{C3}(t)$$

La solution pour $V_{C3}(t)$ permet de dimensionner la capacité C3:

$$V_{C3}(t) = \frac{2C_3\Delta I_{L2}R_S{}^2 + DT(\Delta I_{L2}R_S - 2i_{Out}R_S + 2V_{IN}) - 2\Delta I_{L2}R_S \cdot t}{2DT} + Ae^{-\frac{t}{R_S C_3}}$$

avec la constante A qui dépend des conditions initiales.

Le convertisseur décrit est réalisable à l'aide de composants bien connus en soi dans l'état de l'art. Il peut par exemple être réalisé comme un circuit imprimé, PIB, qui peut comprendre d'autres composants affectés à d'autres applications. L'interrupteur est de préférence réalisé par un transistor, et plus particulièrement par un transistor à effet de champ à grille isolée, MOSFET.

**Revendications**

1. Un convertisseur de type SEPIC destiné à convertir une première tension continue en une deuxième tension continue différente, comprenant :

   - un premier noeud N1, qui sert à connecter une source de tension reliée à la masse, qui fournit la première tension $V_{IN}$;
   - une première inductance L1 couplée au premier noeud N1 et à un deuxième noeud N2 ;
   - un interrupteur S1 comprenant un premier contact couplé au noeud N2, et un deuxième contact couplé à la masse;
   - une première capacité C1 couplée au noeud N2 à un troisième noeud N3 ;
   - une deuxième inductance L2 couplée au noeud N3 et à un quatrième noeud N4 ;
   - une diode D1 montée entre le noeud N3 et un cinquième noeud N5 de façon à ce qu'un courant puisse circuler du noeud N3 au noeud N5, qui sert à connecter un circuit de charge relié à la masse;
   - une deuxième capacité C2 couplée au noeud N5 et à la masse;
   - une résistance de mesure Rs montée entre le noeud N4 et la masse ;

   et **caractérisé en ce que** le convertisseur comprend une branche qui relie le noeud N1 au noeud N4, et qui comprend une troisième capacité C3.

2. Un convertisseur selon la revendication 1, **caractérisé en ce que** la valeur de la première inductance L1 est différente de la deuxième inductance L2.

3. Un convertisseur selon une quelconque des revendications 1 ou 2, **caractérisé en ce que** les deux inductances L1 et L2 sont couplées.

4. Un convertisseur selon une quelconque des revendications 1 à 3, **caractérisé en ce que** l'interrupteur est un transistor.

5. Un convertisseur selon une quelconque des revendications 1 à 4, **caractérisé en ce que** l'interrupteur est un transistor à effet de champ à grille isolée, MOSFET.

6. Un convertisseur selon une quelconque des revendications 1 à 5, dans lequel la capacité C3 est dimensionnée de façon à ce que la différence de potentiel entre le noeud N4 et la masse ne change pas lors de l'opération du convertisseur.

7. Un dispositif de pilotage de l'alimentation électrique de diodes électroluminescentes, LED, pour un véhicule automobile, comprenant un convertisseur de type SEPIC, **caractérisé en ce que** le convertisseur est conforme à une quelconque des revendications 1 à 6.

8. Le dispositif selon la revendication 7 **caractérisé en ce que** le dispositif comprend des moyens de mesure de courant disposées de façon à mesurer le courant électrique entre le noeud N4 et la masse, correspondant à une mesure indirecte du courant de sortie du convertisseur

9. Le dispositif selon la revendication 8, **caractérisé en ce que** le convertisseur est asservi en courant de sortie par la mesure indirecte du courant de sortie.

10. Un dispositif lumineux pour véhicule automobile, notamment un dispositif d'éclairage ou de signalisation, comprenant une pluralité de LEDs et un dispositif de pilotage de l'alimentation de la pluralité de LEDs, **caractérisé en ce que** le dispositif de pilotage est conforme à une quelconques des revendications 7 à 9.

11. Procédé d'alimentation d'au moins une diode électroluminescente, LED, montée en circuit de charge d'un convertisseur de type SEPIC selon une quelconque des revendications 1 à 6 et alimenté par une première source de tension VIN, **caractérisé en ce que** le procédé comprend les étapes de :

- prise de mesure indirecte du courant de sortie du convertisseur par mesure du courant électrique entre le noeud N4 et la masse ;
- asservissement du convertisseur en courant de sortie par la mesure indirecte.

12. Procédé selon la revendication 11, **caractérisé en ce que** aux moins deux diodes électroluminescentes, LED, sont montées en série dans ledit circuit de charge.

**Patentansprüche**

1. SEPIC-Wandler zum Umwandeln einer ersten Gleichspannung in eine zweite unterschiedliche Gleichspannung, umfassend:

- einen ersten NI-Knoten, der zum Verbinden einer mit Masse verbundenen Spannungsquelle verwendet wird, die die erste Spannung VIN liefert;
- eine erste LI-Induktivität, die mit dem ersten NI-Knoten und einem zweiten N2-Knoten gekoppelt ist
- einen Schalter S1, der einen ersten Kontakt, der mit dem Knoten N2 gekoppelt ist, und einen zweiten Kontakt, der mit Masse gekoppelt ist, umfasst;
- eine erste Kapazität C1, die mit dem Knoten N2 mit einem dritten Knoten N3 gekoppelt ist
- eine zweite Induktivität 1.2, die mit dem N3-Knoten und einem vierten N4-Knoten gekoppelt ist;
- eine D1-Diode, die zwischen dem Knoten N3 und einem fünften Knoten N5 montiert ist, so dass ein Strom vom Knoten N3 zum Knoten N5 fließen kann, der zum Verbinden einer Lastschaltung verwendet wird, die mit Masse verbunden ist;
- eine zweite Kapazität C2, die mit dem N5-Knoten und der Masse gekoppelt ist;
- ein RS-Messwiderstand, der zwischen dem Knoten N4 und der Masse montiert ist, **dadurch gekennzeichnet, dass** der Wandler einen Abzweig umfasst, der den Knoten NI mit dem Knoten N4 verbindet, und der einen dritten C3-Kondensator umfasst.

2. Umrichter nach Anspruch 1, **dadurch gekennzeichnet, dass** sich der Wert der ersten Induktivität L1 von der zweiten Induktivität 1,2 unterscheidet.

3. Umrichter nach einem der Ansprüche 1 oder 2, **dadurch gekennzeichnet, dass** beide Induktivitäten L1 und 1,2 gekoppelt sind.

4. Wandler nach einem der Ansprüche 1 bis 3, **dadurch gekennzeichnet, dass** der Schalter ein Transistor ist.

5. Wandler nach einem der Ansprüche 1 bis 4,5, **dadurch gekennzeichnet, dass** der Schalter ein Feldeffekttransistor mit isoliertem Gate, MOSFET, ist.

6. Umrichter nach einem der Ansprüche 1 bis 5, bei dem die Kapazität C3 so bemessen ist, dass sich die Potentialdifferenz 10 zwischen Knoten N4 und Masse während des Betriebs des Umrichters nicht ändert.

7. Vorrichtung zum Steuern der elektrischen Versorgung von Leuchtdioden, LEDs, für ein Kraftfahrzeug, umfassend einen SEPIC-Wandler, **dadurch gekennzeichnet, dass** der Wandler einem der Ansprüche 1 bis 6 entspricht.

8. Die Vorrichtung nach Anspruch 7, **dadurch gekennzeichnet, dass** die Vorrichtung Strommessmittel umfasst, die angeordnet sind, um den elektrischen Strom zwischen dem Knoten N4 und masse zu messen, entsprechend einer indirekten Messung des Ausgangsstroms des Umrichters.

9. Die Vorrichtung nach Anspruch 8, **dadurch gekennzeichnet, dass** der Umrichter im Ausgangsstrom durch die indirekte Messung des Ausgangsstroms gesteuert wird.

10. Beleuchtungsvorrichtung für ein Kraftfahrzeug, insbesondere eine Beleuchtungs- oder Signalvorrichtung, umfassend eine Vielzahl von LEDs und eine Vorrichtung zum Steuern der Stromversorgung der Vielzahl von LEDs, **dadurch gekennzeichnet, dass** die Steuervorrichtung einem der Ansprüche 7 bis 9 entspricht.

11. Verfahren zur Versorgung mindestens einer lichtemittierenden Diode, LED, die mit der Ladeschaltung eines SEPIC-Wandlers nach einem der Ansprüche 1 bis 6 verbunden und von einer ersten VIN-Spannungsquelle versorgt wird, **dadurch gekennzeichnet, dass** das Verfahren die 5 Schritte umfasst:

- indirekte Messung des Umrichterausgangsstroms durch Messung des elektrischen Stroms zwischen Knoten N4 und Masse
- und die Steuerung des Umrichters auf Ausgangsstrom durch indirekte Messung.

12. Verfahren nach Anspruch 11, **dadurch gekennzeichnet, dass** mindestens zwei Leuchtdioden, LEDs, in der Ladeschaltung in Reihe geschaltet sind.

## Claims

1. A SEPIC type converter for converting a first DC voltage to a second different DC voltage, comprising:

   - a first NI node, which is used to connect a voltage source connected to ground, which provides the first voltage VIN;
   - a first LI inductance coupled to the first NI node and a second N2 node
   - a switch S1 comprising a first contact coupled to the node N2, and a second contact coupled to ground;
   - a first capacity C1 coupled to the node N2 to a third node N3
   - a second inductance 1.2 coupled to the N3 node and a fourth N4 node ;
   - a D1 diode mounted between the Node N3 and a fifth Node N5 so that a current can flow from the Node N3 to the Node N5, which is used to connect a load circuit connected to ground;
   - a second capacity C2 coupled to the N5 node and mass;
   - an RS measuring resistor mounted between the Node N4 and the ground is **characterized in that** the converter comprises a branch which connects the Node NI to the Node N4, and which comprises a third C3 capacitor.

2. A converter according to claim 1, **characterized in that** the value of the first inductance L1 is different from the second inductance 1.2.

3. A converter according to any of claims 1 or 2, **characterized in that** both inductors L1 and 1.2 are coupled.

4. A converter according to any of claims 1 to 3, **characterized in that** the switch is a transistor.

5. A converter according to any of claims 1 to 4.5 **characterized in that** the switch is an insulated gate field effect transistor, MOSFET.

6. A converter according to any of claims 1 to 5, in which the capacity C3 is sized so that the potential difference 10 between node N4 and mass does not change during the operation of the converter.

7. A device for controlling the electrical supply of light-emitting diodes, LEDs, for a motor vehicle, comprising a SEPIC-type converter, **characterized in that** the converter complies with any of claims 1 to 6.

8. The device according to claim 7 **characterized in that** the device comprises current measuring means arranged to measure the electrical current between node N4 and ground, corresponding to an indirect measurement of the output current of the converter.

9. The device according to claim 8, **characterized in that** the converter is controlled in output current by the indirect measurement of the output current.

10. A light device for a motor vehicle, in particular a lighting or signalling device, comprising a plurality of LEDs and a device for controlling the power supply of the plurality of LEDs, **characterized in that** the control device complies with any of claims 7 to 9.

11. Process for supplying at least one light-emitting diode, LED, connected to the charging circuit of a SEPIC converter according to any of claims 1 to 6 and supplied by a first VIN voltage source, **characterized in that** the process comprises the 5 steps of:

- indirect measurement of the converter output current by measuring the electrical current between node N4 and ground
- and the control of the converter to output current by indirect measurement.

12. Process according to claim 11, **characterized in that** at least two light-emitting diodes, LEDs, are connected in series in said charging circuit.

Fig. 1

Fig. 2a

Fig. 2b

Fig. 2c

Fig. 3

Fig. 4a

Fig. 4b

Fig. 4c

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Single-Stage Coupled-Inductor Sepic-Type HB-LED Driver with Soft Switching for Universal Line Input. *Mathematical problems in engineering,* vol. 14 (4